Europäisches Patentamt

European Patent Office

Office européen des brevets

(11) Veröffentlichungsnummer: **0 280 955**
**A2**

## EUROPÄISCHE PATENTANMELDUNG

(21) Anmeldenummer: 88102212.3

(51) Int. Cl.⁴: **H04Q 11/04**

(22) Anmeldetag: 15.02.88

(30) Priorität: 02.03.87 DE 3706676

(43) Veröffentlichungstag der Anmeldung:
07.09.88 Patentblatt 88/36

(84) Benannte Vertragsstaaten:
**AT BE CH DE IT LI NL**

(71) Anmelder: **Siemens Aktiengesellschaft Berlin und München**
**Wittelsbacherplatz 2**
**D-8000 München 2(DE)**

(72) Erfinder: **Reisinger, Konrad, Dipl.-Ing.**
**Bahnwiesenstrasse 5**
**D-8011 Zorneding(DE)**
Erfinder: **Beck, Jörn, Dipl.-Ing.**
**Ammerseestrasse 8**
**D-8027 Neuried(DE)**

(54) **Schaltungsanordnung zum Anschliessen von Teilnehmereinrichtungen an ein Kommunikationsnetz.**

(57) Die Schaltungsanordnung soll es ermöglichen, Vermittlungsstellen eines sowohl für Wählverbindungen als auch für Festverbindungen benutzten Kommunikationsnetzes hinsichtlich des Verwaltungsaufwandes für die in Festverbindungen einbezogenen Teilnehmereinrichtungen zu entlasten.

Die Schaltungsanordnung weist eine mit einer Vermittlungsstelle (VS) des Kommunikationsnetzes verbundene, eine Vielzahl von Übertragungskanälen aufweisende Multiplexanordnung (M2) auf. Lediglich an eine festgelegte Anzahl von Übertragungskanälen sind Teilnehmereinrichtungen angeschlossen, die über die Multiplexanordnung in über die Vermittlungsstelle verlaufende Wählverbindungen oder Festverbindungen einbezogen sind. Die übrigen Übertragungskanäle, die wahlfrei miteinander verbindbarsind, sind für den Anschluß von Teilnehmereinrichtungen vorgesehen, die untereinander in lediglich über die Multiplexanordnung verlaufende Festverbindungen einbezogen sind.

Die Schaltungsanordnung ist zum Anschließen von für die Aufnahme und/oder Abgabe von digitalen Nachrichtensignalen dienenden Teilnehmereinrichtungen an ein sowohl für Wählverbindungen als auch für Festverbindungen benutztes Kommunikationsnetz einsetzbar.

**FIG 1**

## Schaltungsanordnung zum Anschließen von Teilnehmereinrichtungen an ein Kommunikationsnetz.

Die Erfindung betrifft eine Schaltungsanordnung zum Anschließen von für die Aufnahme und/oder Abgabe von digitalen Nachrichtensignalen dienenden Teilnehmereinrichtungen an ein sowohl für Wählverbindungen als auch für Festverbindungen benutztes Kommunikationsnetz, welches zumindest eine Vermittlungsstelle mit einer Vielzahl von Übertragungskanälen aufweist, denen jeweils auf wenigstens einer Multiplex-Teilnehmeranschlußleitung entsprechend der auf ihnen für die Übertragung von Nachrichtensignalen zu benutzenden Übertragungsgeschwindigkeit wenigstens ein Zeitkanal aus einer Mehrzahl von vorhandenen Zeitkanälen mit jeweils zyklisch wiederholt in aufeinanderfolgenden Multiplexrahmen auftretenden Zeitschlitzen zugeordnet ist, wobei die jeweilige Multiplex-Teilnehmeranschlußleitung durch eine eine Vielzahl von den genannten Zeitkanälen der Multiplex-Teilnehmeranschlußleitung zuordenbaren Übertragungskanälen aufweisende Teilnehmer-Multiplexanordnung abgeschlossen ist.

Es sind bereits Übertragungsnetze für Datenfest-und Datenwählverbindungen bekannt (Zeitschrift "telcom report", 4 (1981), Heft 2, Seiten 104 bis 112). Bei diesen Übertragungsnetzen sind u. a. Zeitmultiplex-Systeme vorgesehen, über die in über Vermittlungsstellen verlaufende Wähl-und Festverbindungen einbezogene Teilnehmereinrichtungen an Vermittlungsstellen angeschlossen sind.

Es ist nun Aufgabe der vorliegenden Erfindung, einen Weg zu zeigen, wie bei einer Schaltungsanordnung der eingangs genannten Art die jeweilige Vermittlungsstelle hinsichtlich des Verwaltungsaufwandes für die in Festverbindungen einbezogenen Teilnehmereinrichtungen entlastet werden kann.

Gelöst wird die vorstehend aufgezeigte Aufgabe bei einer Schaltungsanordnung der eingangs genannten Art erfindungsgemäß dadurch, daß lediglich an eine durch die Anzahl der Übertragungskanäle der jeweiligen Vermittlungsstelle, die den Zeitkanälen der Multiplex-Teilnehmeranschlußleitung zugeordnet sind, festgelegte Anzahl von Übertragungskanälen der Teilnehmer-Multiplexanordnung in über die jeweilige Vermittlungsstelle verlaufende Wählverbindungen und /oder Festverbindungen einbezogene Teilnehmereinrichtungen angeschlossen sind und daß an die verbleibenden Übertragungskanäle der Teilnehmer-Multiplexanordnung, die wahlfrei miteinander verbindbar sind, Teilnehmereinrichtungen angeschlossen sind, die untereinander in lediglich über die Teilnehmer-Multiplexanordnung verlaufende Festverbindungen einbezogen sind.

Die Erfindung bringt den Vorteil mit sich, daß lediglich in über Vermittlungsstellen verlaufende Festverbindungen einbezogene Teilnehmereinrichtungen für die Übertragung von digitalen Nachrichtensignalen von der jeweiligen Vermittlungsstelle zu verwalten sind. Ein Verwaltungsaufwand für Teilnehmereinrichtungen, die an die Teilnehmer-Multiplexanordnung angeschlossen sind und untereinander in Festverbindungen einbezogen sind, fällt dagegen in der mit der Teilnehmer-Multiplexanordnung verbundenen Vermittlungsstelle nicht an, da diese Festverbindungen ausschließlich über die Übertragungskanäle der Teilnehmer-Multiplexanordnung verlaufen.

Im folgenden wird nun die Erfindung anhand von Zeichnungen näher beschrieben.

FIG 1 zeigt ausschnittweise ein Kommunikationsnetz, bei dem die Erfindung angewandt ist und

FIG 2 zeigt ein Blockschaltbild der in FIG 1 dargestellten Teil nehmer-Multiplexanordnung.

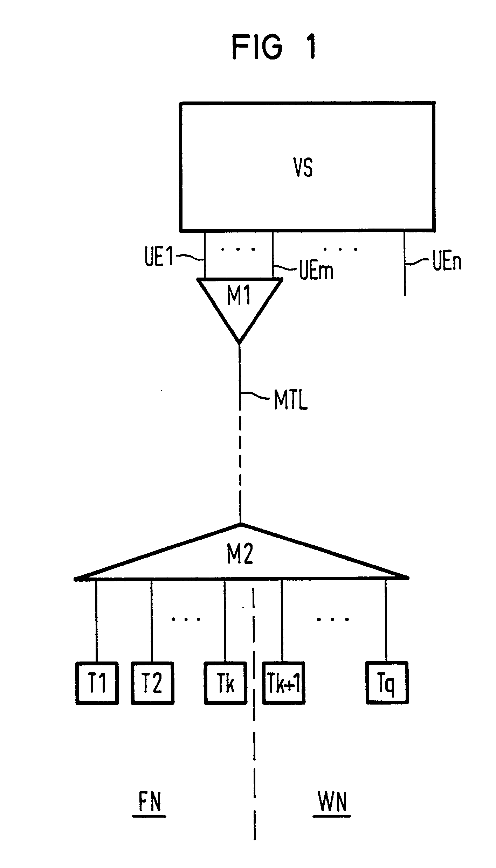

In FIG 1 ist ausschnittweise ein für die Übertragung von digitalen Nachrichtensignalen dienendes Kommunikationsnetz dargestellt. Bei diesen Nachrichtensignalen möge es sich um digitale Text-oder Datensignale handeln. Dabei wird im folgenden lediglich als Beispiel davon ausgegangen, daß diese innerhalb des Kommunikationsnetzes nach einem synchronen Übertragungsverfahren übertragen werden. Von dem Kommunikationsnetz ist eine Vermittlungsstelle VS gezeigt, die über eine Vielzahl von Übertragungskanälen UE1 bis UEn verfügt. Von diesen ist jeweils eine festgelegte Anzahl an eine Multiplexanordnung angeschlossen. Eine dieser Multiplexanordnungen, an die die Übertragungskanäle UE1 bis UEm angeschlossen sein mögen, ist in FIG 1 mit M1 bezeichnet. Dabei sei angemerkt, daß die Multiplexanordnungen auch in die Vermittlungsstelle VS integriert sein können.

Die Multiplexanordnung M1 ist mit ihrem Multiplexausgang an eine Multiplex-Teilnehmeranschlußleitung MTL angeschlossen. Auf dieser ist den Übertragungskanälen UE1 bis UEm entsprechend der Übertragungsgeschwindigkeit, mit der diese Text-oder Datensignale von Teilnehmereinrichtungen aufnehmen bzw. an diese abgeben, jeweils mindestens ein Zeitkanal einer Mehrzahl von festgelegten Zeitkanälen zugeordnet. Diese Zeitkanäle weisen dabei jeweils zyklisch wiederholt in aufeinanderfolgenden Multiplexrahmen auftretende Zeitschlitze auf. Die Multiplexrahmen mögen dabei beispielsweise gemäß der CCITT-Empfehlung X.51 festgelegt sein.

Die Multiplex-Teilnehmeranschlußleitung MTL ist durch eine Teilnehmer-Multiplexanordnung M2 abgeschlossen. Diese verfügt über eine Vielzahl von für den Anschluß von Teilnehmereinrichtungen vorgesehenen, den genannten Zeitkanälen und damit den Übertragungskanälen UE1 bis UEm zuordenbaren Übertragungskanälen. An diese angeschlossene Teilnehmereinrichtungen sind mit T1 bis Tq bezeichnet. Es möge sich bei diesen entsprechend den vorangegange nen Ausführungen um Teilnehmereinrichtungen für die Aufnahme und/oder Abgabe von nach einem synchronen Übertragungsverfahren übertragenen Text-oder Datensignalen handeln. Beispiele für derartige Teilnehmereinrichtungen sind Bürofernschreibstationen, die auch als Teletex-Endgeräte bezeichnet werden.

Von den Teilnehmereinrichtungen T1 bis Tq mögen die mit T1 bis Tk bezeichneten einem Festverbindungsnetz FN, die mit T(k + 1) bis Tq bezeichneten dagegen einem Wählverbindungsnetz WN zugehörig sein. Neben den Teilnehmereinrichtungen T(k + 1) bis Tq ist durch eine entsprechende Zeitkanalzuordnung auf der Multiplex-Teilnehmeranschlußleitung MTL von den Teilnehmereinrichtungen T1 bis Tk lediglich denjenigen jeweils ein Übertragungskanal der genannten Übertragungskanäle UE1 bis UEm zugeordnet, die in über die Vermittlungsstelle VS verlaufende Festverbindungen einbezogen sind. Dagegen sind Festverbindungen zwischen an die Teilnehmer-Multiplexanordnung M2 angeschlossenen Teilnehmereinrichtungen direkt über die in Frage kommenden Übertragungskanäle dieser Teilnehmer-Multiplexanordnung eingerichtet. Damit ist die Vermittlungsstelle VS hinsichtlich dieser Festverbindungen entlastet.

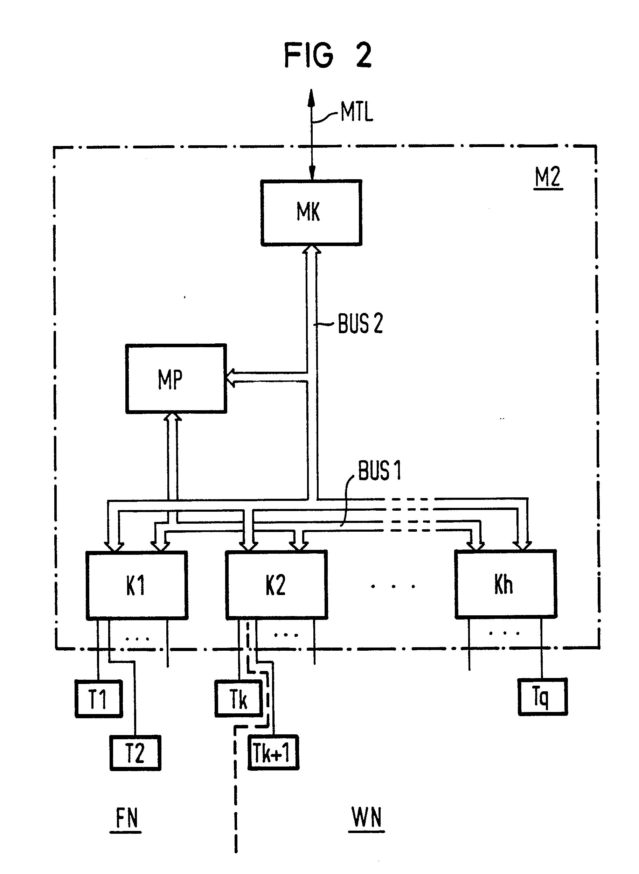

Als Teilnehmer-Multiplexanordnung M2 kann beispielsweise ein unter der Bezeichnung ZD-A3/2 bekanntes Zeitmultiplex-Datenübertragungssystem (Zeitschrift "telcom report", 8 (1985), Heft 2, Seiten 113 bis 118) verwendet werden. Ein vereinfachtes Blockschaltbild dieses Zeitmultiplex-Datenübertragungssystems und damit der Teilnehmer-Multiplexanordnung M2 ist in FIG 2 dargestellt. Die Teilnehmer-Multiplexanordnung weist danach eine Mehrzahl von Übertragungskanalgruppen K1 bis Kh auf, an die jeweils eine festgelegte Anzahl der Teilnehmereinrichtungen T1 bis Tq angeschlossen ist. Diese Übertragungskanalgruppen stehen über ein erstes Busleitungssystem BUS1 untereinander und zusätzlich mit einer Mikroprozessoranordnung MP in Verbindung. Ein weiteres Busleitungssystem BUS 2 verbindet diese Mikroprozessoranordnung und die Übertragungskanalgruppen mit einer Multiplexkanalgruppe MK, die die Schnittstelle zwischen der Teilnehmer-Multiplexanordnung und der genannten Multiplex-Teilnehmeranschlußleitung MTL darstellt. Von den Teilnehmereinrichtungen abgegebene Text-oder Datensignale werden von den jeweils in Frage kommenden Übertragungskanalgruppen aufgenommen und gelangen von hier aus über das Busleitungssystem BUS1 zu der Mikroprozessoranordnung MP. In einer dieser zugehörigen Speicheranordnung sind Angaben bezüglich der Zugehörigkeit der Teilnehmereinrichtungen zu dem Festverbindungsnetz FN bzw. Wählverbindungsnetz WN gespeichert, die u.a. Aufschluß darüber geben, ob die Teilnehmereinrichtungen des Festverbindungsnetzes mit einer ebenfalls an der Teilnehmer-Multiplexanordnung M2 angeschlossenen Teilnehmereinrichtung in Verbindung stehen. Nach Maßgabe dieser Angaben leitet die Mikroprozessoranordnung Text-oder Datensignale, die ihr von Teilnehmereinrichtungen des Wählverbindungsnetzes WN und von in über die Vermittlungsstelle VS verlaufende Festverbindungen einbezogenen Teilnehmereinrichtungen zugeführt werden, entsprechend der für die einzelnen Teilnehmereinrichtungen festgelegten Zeitkanalzuordnung über das Busleitungssystem BUS2 an die Multiplexkanalgruppe MK weiter, die diesen entsprechende Signale dann an die Multiplex-Teilnehmeranschlußleitung MTL abgibt. In entsprechender Weise nimmt die Multiplexkanalgruppe MK die in Zeitkanälen übertragenen Text-oder Datensignale auf und leitet diese an die Mikroprozessoranordnung MP weiter, die diese Signale dann über das Busleitungssystem BUS1 an die in Frage kommenden Teilnehmereinrichtungen verteilt.

Die Mikroprozessoranordnung MP leitet dagegen Text-oder Datensignale von Teilnehmereinrichtungen des Festverbindungsnetzes, die mit einer an die Teilnehmer-Multiplexanordnung angeschlossenen Teilnehmereinrichtung in Verbindung stehen, direkt über das Busleitungssystem BUS1 an die jeweils in Frage kommende Übertragungskanalgruppe weiter.

Abschließend sei noch darauf hingewiesen, daß zwar vorstehend die Erfindung am Beispiel von nach einem synchronen Übertragungsverfahren Text-oder Datensignale aufnehmenden und/oder abgeben den Teilnehmereinrichtungen beschrieben worden ist. Die Erfindung ist jedoch auch allgemein in für Wählverbindungen und Festverbindungen benutzten Kommunikationsnetzen einsetzbar, in denen zwischen Teilnehmereinrichtungen Nachrichtensignale in digitaler Form zu übertragen sind. Als Beispiele seien hier genannt Kommunikationsnetze, in denen Text-oder Datensignale nach einem asynchronen Übertragungsverfahren bzw. Sprachsignale in digitaler Form übertragen werden.

## Ansprüche

1. Schaltungsanordnung zum Anschließen von für die Aufnahme und/oder Abgabe von digitalen Nachrichtensignalen dienenden Teilnehmereinrichtungen (T1 bis Tq) an ein sowohl für Wählverbindungen als auch für Festverbindungen benutztes Kommunikationsnetz, welches zumindest eine Vermittlungsstelle (VS) mit einer Vielzahl von Übertragungskanälen (UE1 bis UEn) aufweist, denen jeweils auf wenigstens einer Multiplex-Teilnehmeranschlußleitung (MTL) entsprechend der auf ihnen für die Übertragung von Nachrichtensignalen zu benutzenden Übertragungsgeschwindigkeit wenigstens ein Zeitkanal aus einer Mehrzahl von vorhandenen Zeitkanälen mit jeweils zyklisch wiederholt in aufeinanderfolgenden Multiplexrahmen auftretenden Zeitschlitzen zugeordnet ist,
wobei die jeweilige Multiplex-Teilnehmeranschlußleitung durch eine eine Vielzahl von den genannten Zeitkanälen der Multiplex-Teilnehmeranschlußleitung zuordenbaren Übertragungskanälen aufweisende Teilnehmer-Multiplexanordnung (M2) abgeschlossen ist, **dadurch gekennzeichnet**, daß lediglich an eine durch die Anzahl der Übertragungskanäle (UE1 bis UEm) der jeweiligen Vermittlungsstelle, die den Zeitkanälen der Multiplex-Teilnehmeranschlußleitung zugeordnet sind, festgelegte Anzahl von Übertragungskanälen der Teilnehmer-Multiplexanordnung in über die jeweilige Vermittlungsstelle verlaufende Wählverbindungen und/oder Festverbindungen einbezogene Teilnehmereinrichtungen angeschlossen sind und daß an die verbleibenden Übertragungskanäle der Teilnehmer-Multiplexanordnung, (M2) die wahlfrei miteinander verbindbar sind, Teilnehmereinrichtungen angeschlossen sind, die untereinander in lediglich über die Teilnehmer-Multiplexanordnung verlaufende Festverbindungen einbezogen sind.

# FIG 1

# FIG 2